# EUROPÄISCHE PATENTANMELDUNG

(11) **EP 0 626 339 A1**
(43) Veröffentlichungstag der Anmeldung: **30.11.1994**
(21) Anmeldenummer: 94104382.0
(22) Anmeldetag: 21.03.1994
(51) Int. Cl.: B66F 11/04, B64F 5/00

(54) **Hängekran mit einer Arbeitsplattform-Konstruktion, insbesondere für die Flugzeugwartung**

(30) Priorität: 26.05.1993 DE 4317503
(71) Anmelder: MERO-Raumstruktur GmbH & Co., D-97082 Würzburg (DE)
(72) Erfinder: Landes, Albert, D-97234 Reichenberg (DE)
(74) Vertreter: Böck, Bernhard, Dipl.-Ing.

(57) **Zusammenfassung**

Um einen gegenüber bekannten teleskopartigen Hängekranen preiswerteren, steiferen und vom Gewicht her leichteren Hängekran (10) zu schaffen, ist mindestens ein vertikal angeordneter Führungsbaum (16) für einen Hubschacht (17) vorgesehen. Der Hubschacht (17) trägt vorzugsweise zwei Arbeitsplattformen (22, 23) in vertikalen Abstand voneinander. Der Hubschacht (17) ist z.B. durch elektromotorisch angetriebene Seilwinden (19) entlang dem Führungsbaum (16) drehfest auf und ab verfahrbar. Die Arbeitsplattformen (22, 23) sind mit ausfahrbaren Schiebeplattformen (25) ausgerüstet, sodaß z.B. eine Anpassung an die Krümmung des Rumpfes eines zu wartenden Flugzeuges vorgenommen werden kann.

## Beschreibung

Die Erfindung bezieht sich auf einen Hängekran mit einer Arbeitsplattform-Konstruktion, insbesondere für die Flugzeugwartung, die vertikal und horizontal verfahrbar sowie gegebenenfalls auch drehbar ist.

Bekannte derartige Hängekrane weisen eine lotrechte teleskopierbare Tragkonstruktion für eine Arbeitsplattform bzw. Arbeitsbühne auf, die an einer Hallendecke verfahrbar angeordnet ist, wobei die Arbeitsplattform am untersten Teleskopteil der Tragkonstruktion befestigt ist (Prospekt der Mannesmann DEMAG Fördertechnik A/1086/3T). Die teleskopierbare Tragkonstruktion hat relativ viele Züge, was ein entsprechend großes Spiel bei der Einstellung der Arbeitsplattform zur Folge hat. Außerdem sind diese teleskopierbaren Tragkonstruktionen in der Herstellung teuer und sie ermöglichen nur die Anordnung einer Arbeitsplattform bzw. Arbeitsbühne am unteren Ende des untersten Teleskopteils. Als Folge ergeben sich entsprechend häufige zeitaufwendige Positionierungsarbeiten, insbesondere bei der Flugzeugwartung. Schließlich weisen diese bekannten Hängekrane auch ein verhältnismäßig hohes Gewicht auf, was insbesondere bei weitgespannten Tragwerken, wie sie für Dächer von Flugzeug-Hangars oder dgl. verwendet werden, ungünstig ist.

Der Erfindung liegt die Aufgabe zugrunde, einen Hängekran zu schaffen, der obige Mängel vermeidet, baulich vereinfacht und vom Gewicht her leichter ist, in der Herstellung preiswerter kommt und dessen Tragkonstruktion eine relativ hohe Steifigkeit aufweist. Auch soll der Hängekran zur Vereinfachung und Beschleunigung der Wartungsarbeiten mit mehreren Arbeitsplattformen bzw. Arbeitsbühnen ausgerüstet werden können.

Obige Aufgabe wird erfindungsgemäß dadurch gelöst,
a) daß der Hängekran mindestens einen vertikal angeordneten Führungsbaum für einen Hubschacht aufweist, der eine oder mehrere Arbeitsplattformen trägt,
b) daß der Hubschacht durch eine oder mehrere Seilwinden, ein Kletterhubwerk oder dergleichen Hubvorrichtung entlang dem Führungsbaum auf- und ab verfahrbar ist und
c) daß der Hubschacht am Führungsbaum drehfest geführt ist.

Im Vergleich zu teleskopierbaren Konstruktionen ist der erfindungsgemäße Hängekran preiswerter und mit geringerem Gewicht herstellbar, sodaß er insbesondere für weitgespannte Hallentragwerke geeignet ist, wie sie beispielsweise bei Flugzeugwartungshallen vorkommen. Der Führungsbaum kann, bei Bedarf, vorteilhaft am deckenseitigen Kranfahrwerk auch drehbar angeordnet werden. Ein weiterer Vorteil der Erfindung besteht darin, daß an dem Hubschacht in vertikalem Abstand voneinander auch mehrere Arbeitsplattformen befestigt werden können, die dann untereinander durch Treppenzüge verbunden werden können. Der Führungsbaum ermöglicht schließlich eine exakte Führung des Hubschachtes bei Positionierungsarbeiten, z.B. entlang eines Flugzeugrumpfes oder am Seitenleitwerk eines Flugzeugs.

Ausgestaltungen der Erfindung gehen aus den Unteransprüchen hervor. So trägt zweckmäßig der Hubschacht in vertikalem Abstand voneinander zwei Arbeitsplattformen, wobei die untere Arbeitsplattform am unteren Ende des Hubschachtes befestigt ist. Zwei solche Arbeitsplattformen reichen in der Regel für Wartungsarbeiten an einem Flugzeug aus. Die Anordnung könnte ggf. so getroffen sein, daß bei völlig abgesenktem Hubschacht die untere Arbeitsplattform vom betreffenden Hallenboden aus zugänglich ist.

Eine weitere Ausgestaltung der Erfindung sieht vor, daß nahe dem oberen Ende des Hubschachtes eine weitere Arbeitsbühne zur Wartung der Hubvorrichtung vorgesehen ist.

Wenn nach noch einer weiteren Ausgestaltung der Erfindung der Hängekran mindestens eine entlang einer Kranbrücke verfahrbare Laufkatze aufweist, an welcher das obere Ende eines Führungsbaums mit einem Hubschacht befestigt ist, ist eine große Flexibilität z.B. bei der Wartung eines Flugzeugs gewährleistet.

Zweckmäßig sind die Arbeitsplattformen an dem Hubschacht in gleicher Richtung auskragend befestigt.

Nach noch einer weiteren Ausbildung der Erfindung sind die Arbeitsplattformen mit ausfahrbaren Schiebeplattformen ausgerüstet, was vorteilhaft die Anpassungen an die Krümmung beispielsweise eines Flugzeugrumpfes ermöglicht.

Nach noch einer weiteren Ausbildung der Erfindung sind die Arbeitsplattformen, in der Draufsicht, U-förmig ausgebildet und mit ihren Schenkel am Hubschacht befestigt.

Zweckmäßig ist zwischen dem Hubschacht und dem Verbindungssteg zwischen den Schenkeln der einen U-förmigen Arbeitsplattform Raum für eine Verbindungstreppe zwischen den Arbeitsplattformen vorgesehen.

Der Führungsbaum und der Hubschacht können einen mehreckigen, z.B. quadratischen oder kreisrunden hohlen Querschnitt aufweisen.

Nach noch einer weiteren Ausgestaltung der Erfindung ist der Hubschacht mittels Rollen an der Außenwand bzw. den Außenwänden des Führungsbaums geführt. Diese Rollenführung gewährleistet eine leichtgängige und gleichwohl exakte Höhenverstellung des Hubschachtes.

Die Erfindung wird anschließend anhand der Zeichnungen eines Ausführungsbeispiels erläutert. Es zeigen:

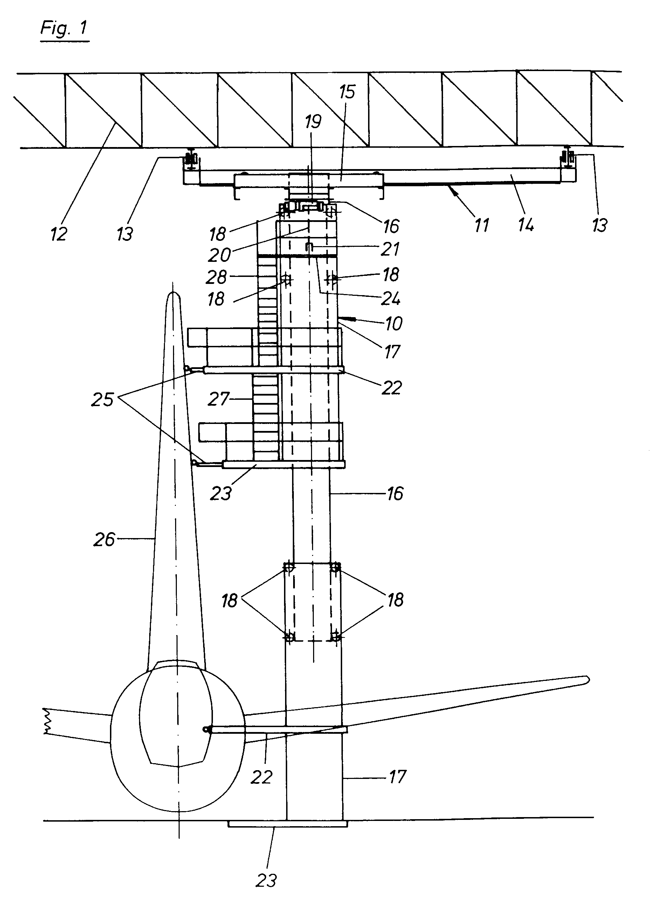

- Fig. 1: eine Seitenansicht eines Hängekrans mit Führungsbaum für einen Hubschacht mit zwei Arbeitsplattformen, positioniert am Seitenleitwerk eines schematisch angedeuteten Flugzeuges;
- Fig. 2: eine Vorderansicht des in Fig. 1 gezeigten Hängekrans, ohne Flugzeugteile;
- Fig. 3: eine Schnittansicht entlang der Linie III-III in Fig. 2;
- Fig. 4: eine Teil-Seitenansicht einer Krankonstruktion, die mehrere Hängekrane mit Führungsbäume für Hubschächte gem. der Erfindung trägt, und zwar in Verbindung mit einem schematisch angedeuteten Flugzeug, von dem jedoch nur ein vorderer Teil und das Heckteil gezeigt sind;
- Fig. 5: eine Stirnansicht der in Fig. 4 gezeigten Hängekrankonstruktionen, gleichfalls in Verbindung mit einem schematisch angedeuteten Flugzeug, von dem in der linken Hälfte das Heckteil und in der rechten Hälfte der Rumpf angedeutet sind und
- Fig. 6: eine Draufsicht der in Fig. 4 gezeigten Hängekrankonstruktionen, ohne Kranfahrwerk.

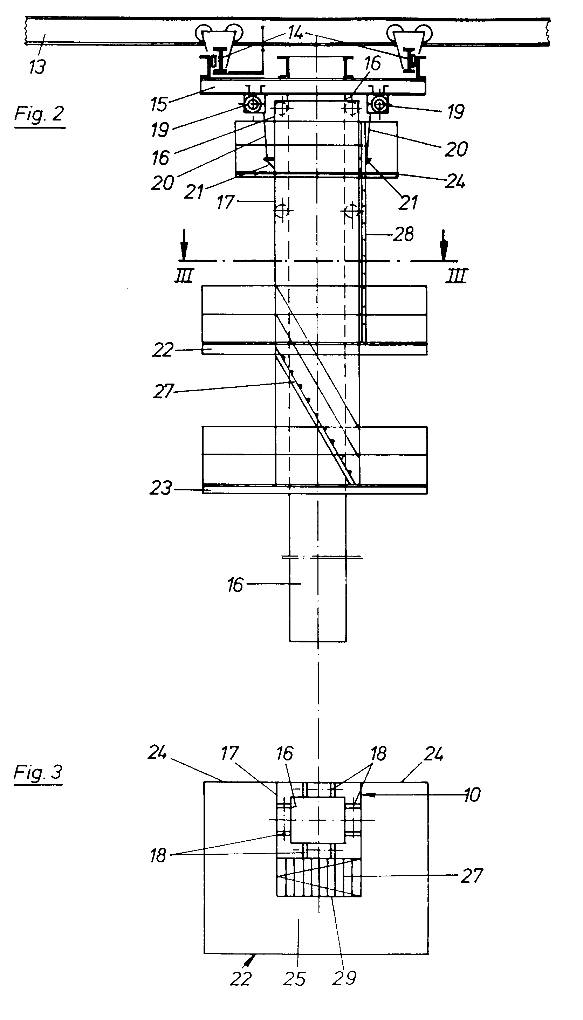

Der als Ausführungsbeispiel gewählte Hängekran 10 dient zur Flugzeugwartung. Der Hängekran 10 ist aus diesem Grund am Dachtragwerk 12 einer Flugzeugwartungshalle angeordnet. Der Hängekran 10 weist parallel zur Hallen-Längsachse am Dachtragwerk 12 befestigte Kranschienen 13 auf, und entlang jeweils einem Paar dieser Kranschienen 13 ist eine Kranbrücke 14 mittels eines nicht gezeigten elektromotorischen Antriebs verfahrbar. An der Kranbrücke 14 ist wiederum eine Laufkatze 15 elektromotorisch verfahrbar. Ferner ist an der Laufkatze 15 ein Führungsbaum 16 lotrecht nach unten ragend (hängend) befestigt. Der Führungsbaum 16 könnte an der Laufkatze 15 auch um seine Längsachse drehbar angeordnet sein. In diesem Fall erfolgt eine Drehung des Führungsbaumes 16 ebenfalls durch einen nicht gezeigten elektromotorischen Antrieb über einen Zahnkranz. Der Führungsbaum 16 hat im vorliegenden Fall beispielsweise einen quadratischen hohlen Querschnitt, wie aus Fig. 3 hervorgeht. Der Führungsbaum 16 dient zur vertikalen Führung eines Hubschachtes 17, der gleichfalls einen quadratischen hohlen Querschnitt aufweist und den Führungsbaum 16 allseitig mit gleichem Spiel umfaßt. Im einzelnen erfolgt die Führung des Hubschachtes 17 über eine Anordnung von Rollen 18, die in Fig. 3 schematisch angedeutet ist und sich zwischen dem Führungsbaum 16 und dem Hubschacht 17 befindet. Dabei sind die Achsen dieser Rollen 18 über entsprechende nicht gezeigte Lagerplatten am Hubschacht 17 befestigt. Hieraus ist ersichtlich, daß der Hubschacht 17 am Führungsbaum 16 drehfest geführt ist. Wenn alternativ der Führungsbaum und Hubschacht jeweils kreisrunde hohle Querschnitte aufweisen, ist zu diesem Zweck eine Längsführung zwischen diesen Bauteilen vorzusehen (nicht gezeigt). Zur Auf- und Abwärtsbewegung des Hubschachtes 17 dienen beispielsweise zwei an gegenüberliegenden Seiten des Führungsbaums 16 an der Laufkatze 15 befestigte, elektromotorisch angetriebene Seilwinden 19. Das eine Ende der Seile 20 dieser Seilwinden 19 ist jeweils an einer Konsole 21 fixiert, die ihrerseits an gegenüberliegendenn Seiten des Hubschachtes 17 befestigt sind. Anstelle dieser Seilwinden 21 könnte auch ein nicht gezeigtes Kletterhubwerk zwischen Führungsbaum 16 und Hubschacht 17 vorgesehen sein. Der Vollständigkeit halber sei noch bemerkt, daß die Rollen 18 im oberen Drittel des Hubschachtes 17 in entsprechendem vertikalen Abstand angeordnet sind.

Der Hubschacht 17 trägt beispielsweise zwei in vertikalem Abstand voneinander angeordnete Arbeitsplattformen 22 und 23, wobei letztere 23 am unteren Ende des Hubschachtes 17 befestigt ist. Die Arbeitsplattformen 22 und 23 sind in gleicher Richtung auskragend angeordnet und nahe dem oberen Ende des Hubschachtes 17 ist noch eine Arbeitsbühne 24 befestigt, von der aus Wartungs- oder Reparaturarbeiten an den elektromotorisch angetriebenen Seilwinden 19 durchgeführt werden können.

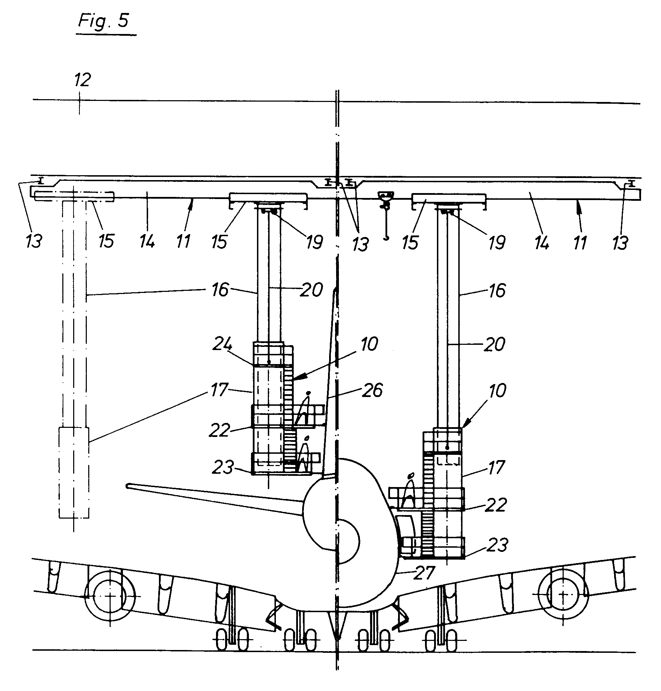

Jede Arbeitsplattform 22 und 23 ist mit einer seitlich ausfahrbaren Schiebeplattform 25 ausgerüstet, sodaß die Arbeitsplattformen 22, 23 den schrägen Flächen z. B. des Seitenleitwerks 26 oder der Krümmung des Rumpfes 27 (Fig. 5) eines zu wartenden Flugzeugs angepaßt werden können.

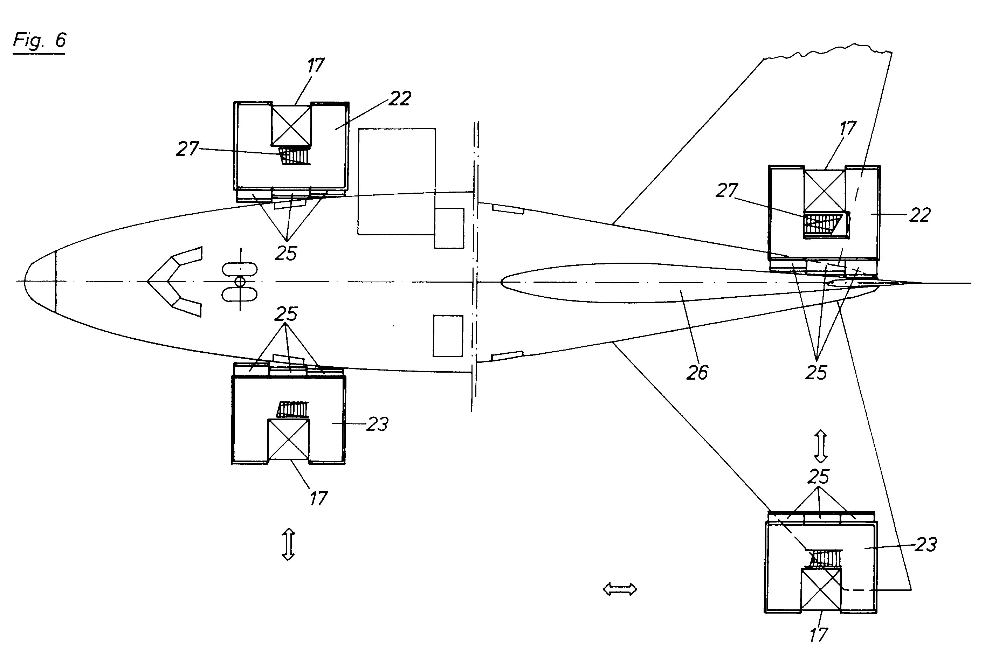

Wie aus den Fig. 3 und 6 hervorgeht, sind die Arbeitsplattformen 22, 23 von oben betrachtet, U-förmig ausgebildet. Dabei sind die Arbeitsplattformen 22, 23 mit ihren Schenkeln 24 am Hubschacht 17 befestigt, und zwar im Fall der Arbeitsplattform 22 derart, daß zwischen dem Verbindungssteg 25 für beide Schenkel 24 und dem Hubschacht 17 ein Freiraum 29 vorhanden ist, in dem eine Verbindungstreppe 27 für die Arbeitsplattformen 22, 23 angeordnet ist. Eine weitere Treppe oder Leiter 28 führt von der oberen Arbeitsplattform 22 zur Arbeitsbühne 24 nahe dem oberen Ende des Hubschachtes 17.

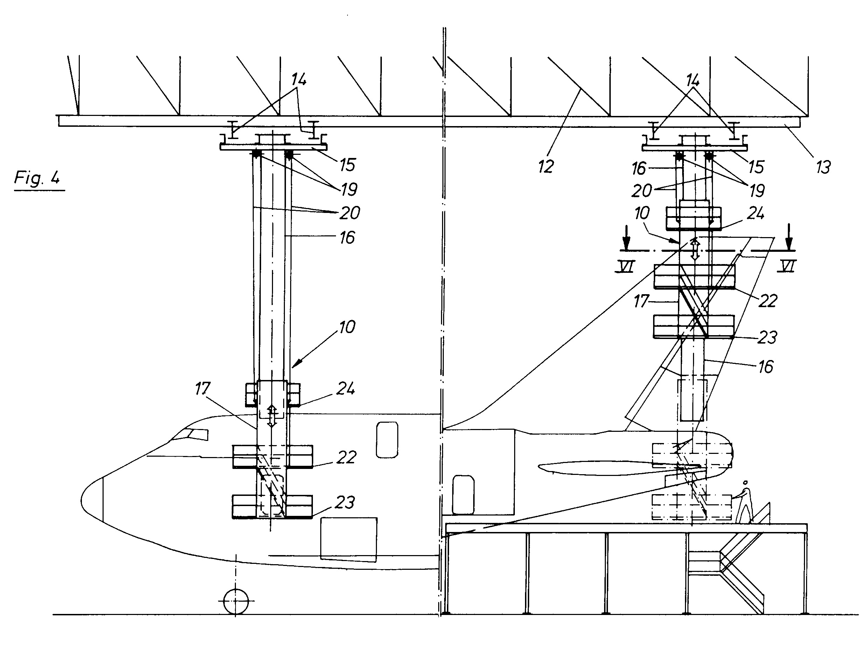

Die Fig. 4, 5 und 6 zeigen eine bevorzugte Anordnung von Hängekranen 10 für die Wartung eines Großflugzeugs. Parallel zur Hallen-Längsachse sind demzufolge je zwei Paare von Kranschienen 13 am Dachtragwerk 12 befestigt und an jedem Paar dieser Kranschienen 13 sind zwei Kranbrücken 14 mit je einem Hängekran 10 verfahrbar. Die Anordnung ist so getroffen, daß ein zu wartendes Flugzeug mit seiner Längsachse parallel zu den Kranschienen 13 positioniert wird, und zwar mittig zwischen den beiden innersten Kranschienen 13 (Fig. 5). Bei einer solchen Anordnung der Hängekrane 10 können gleichzeitig Wartungsarbeiten an beiden Seiten des Flugzeugs im Heck- und Rumpfbereich durchgeführt werden. Im Bedarfsfall können auch mehr als zwei Kranbrücken 14 an den Kranschienen-Paaren 13 vorgesehen sein. Die Hängekrane 10 sind in Parallelrichtung zur Flugzeuglängsachse und quer hierzu verfahrbar und die Hubschächte 17 sind entlang den Führungsbäumen 17 auf- und ab bewegbar wie durch die Pfeile in den Figuren 4 und 6 angedeutet ist.

## Patentansprüche

1. Hängekran mit einer Arbeitsplattform-Konstruktion, insbesondere für die Flugzeugwartung, die vertikal und horizontal verfahrbar sowie ggf. auch drehbar ist, dadurch gekennzeichnet,
a) daß der Hängekran (10) mindestens einen vertikal angeordneten Führungsbaum (16) für einen Hubschacht (17) aufweist, der eine oder mehrere Arbeitsplattformen (22, 23) trägt,
b) daß der Hubschacht (17) durch eine oder mehrere Seilwinden (19) ein Kletterhubwerk oder dergleichen Hubvorrichtung entlang dem Führungsbaum (16) auf und ab verfahrbar ist und
c) daß der Hubschacht (17) am Führungsbaum (16) drehfest geführt ist.

2. Hängekran nach Anspruch 1, dadurch gekennzeichnet, daß der Hubschacht (17) in vertikalem Abstand voneinander zwei Arbeitsplattformen (22, 23) trägt und die untere Arbeitsplattform (23) am unteren Ende des Hubschachtes (17) befestigt ist.

3. Hängekran nach Anspruch 23, dadurch gekennzeichnet, daß nahe dem oberen Ende des Hubschachtes (17) eine weitere Arbeitsbühne (24) zur Wartung der Hubvorrichtung (Seilwinden 19) vorgesehen ist.

4. Hängekran nach Anspruch 1, dadurch gekennzeichnet, daß der Hängekran (10) mindestens eine entlang einer Kranbrücke (14) verfahrbare Laufkatze (15) aufweist, an welcher das obere Ende eines Führungsbaums (16) mit einem Hubschacht (17) befestigt ist.

5. Hängekran nach einem der Ansprüche 1-4, dadurch gekennzeichnet, daß die Arbeitsplattformen (22, 23) an dem Hubschacht (17) in gleicher Richtung auskragend befestigt sind.

6. Hängekran nach einem der Ansprüche 1-5, dadurch gekennzeichnet, daß die Arbeitsplattformen (22, 23) mit ausfahrbaren Schiebeplattformen (25) ausgerüstet sind.

7. Hängekran nach einem der Ansprüche 1-6, dadurch gekennzeichnet, daß die Arbeitsplattformen (22, 23), in der Draufsicht, U-förmig ausgebildet und mit ihren Schenkeln (24) am Hubschacht (17) befestigt sind.

8. Hängekran nach Anspruch 7, dadurch gekennzeichnet, daß zwischen dem Hubschacht (17) und dem Verbindungssteg (25) zwischen den Schenkeln (24) der einen U-förmigen Arbeitsplattform (22) Raum (29) für eine Verbindungstreppe (27) zwischen den Arbeitsplattformen ( 22, 23) vorgesehen ist.

9. Hängekran nach einem der Ansprüche 1-8, dadurch gekennzeichnet, daß der Führungsbaum (16) und der Hubschacht (17) einen mehreckigen, z.B. quadratischen oder kreisrunden hohlen Querschnitt aufweisen.

10. Hängekran nach einem der Ansprüche 1-9, dadurch gekennzeichnet, daß der Hubschacht (17) mittels Rollen (18) an den Außenwänden des Führungsbaums (16) geführt ist.
